# FASCICULE DE BREVET EUROPEEN

(11) **EP 0 601 624 B1**
(45) Date de publication et mention de la délivrance du brevet: **18.09.1996**
(21) Numéro de dépôt: 93203249.3
(22) Date de dépôt: 19.11.1993
(51) Int. Cl.: F16C 17/12

(54) **Palier aérodynamique à film fluide**
Aerodynamisches Lager mit Flüssigkeitsfilm
Aerodynamic film fluide bearing

(30) Priorité: 11.12.1992 FR 9215062
(43) Date de publication de la demande: 15.06.1994
(73) Titulaire: ABG SEMCA S.A., F-31016 Toulouse Cédex (FR)
(72) Inventeur: Heshmat, Hooshang, Niskayuna, NY 12309 (US)
(74) Mandataire: Cabinet BARRE LAFORGUE & associés

(56) Documents cités:
- FR-A- 2 352 985
- FR-A- 2 516 995
- US-A- 4 262 975
- US-A- 4 300 806

## Description

La présente invention concerne un palier aérodynamique à film fluide. Ce type de palier comprend de manière connue au moins un sous-ensemble de palier placé entre un arbre rotatif et un fourreau.

Ce sous-ensemble de palier est constitué généralement de moyens élastiques aptes à permettre la création d'un film aérodynamique entre l'arbre rotatif et le fourreau pour éviter toute fluctuation transversale de cet arbre à l'intérieur du fourreau. Il est déjà connu de tels types de palier présentant un film fluide gazeux ou liquide et pouvant satisfaire, selon la structure donnée au sous-ensemble de palier et notamment à ces moyens élastiques, certaines conditions d'utilisation spécifiques.

Un palier aérodynamique selon le préambule de la revendication 1 est connu du US-A-4 262 975.

Cependant, à ce jour, aucun palier aérodynamique ne permet d'obtenir en même temps :
- une vitesse de rotation élevée de l'arbre sans apparition d'instabilité de fonctionnement,
- une bonne capacité pour supporter les fortes charges et
- un couple et une vitesse faibles au démarrage.

Le but de la présente invention est de créer un palier aérodynamique pouvant satisfaire l'ensemble de ces conditions.

A cet effet, la présente invention concerne un palier aérodynamique à film fluide du type comportant un fourreau cylindrique dans lequel est placé un arbre entraîné en rotation, ledit palier présentant au moins un sous-ensemble de palier placé entre le fourreau et l'arbre rotatif, ce sous-ensemble étant adapté pour maintenir espacé le fourreau et l'arbre et pour faciliter la création entre eux d'un film fluide présentant une résistance déterminée vis-à-vis des fluctuations transversales de l'arbre à l'intérieur du fourreau, ce sous-ensemble de palier comportant :
- une lame supérieure souple s'étendant selon une partie au moins de la circonférence de l'arbre,
- un ensemble de lames ondulées placées entre le fourreau et la lame supérieure, s'étendant selon une partie au moins de la circonférence du fourreau,
- une lame de renforcement placée entre la lame supérieure et l'ensemble de lames ondulées, ledit palier étant caractérisé en ce que cette lame de renforcement est solidaire par une de ses extrémités du fourreau, et présente au moins un lobe de courbure déterminée solidaire de l'ensemble de lames ondulées correspondant.

Ainsi, le fait d'intercaler une lame de renforcement présentant au moins un lobe de courbure déterminé, entre la lame souple et un ensemble de lames ondulées, permet d'effectuer une précharge du sous-ensemble de palier qui présente alors un film fluide d'épaisseur non uniforme le long de la circonférence de l'arbre. On confère ainsi à ce palier des caractéristiques de stabilité supérieures à celles obtenues par un film fluide de forme circulaire et uniforme. Le film fluide selon l'invention présente en fait une épaisseur variable, ce qui permet de créer des forces de frottement de type Coulomb capables de dissiper une partie de l'énergie emmagasinée lors de la rotation de l'arbre. Le fait que cette lame de renforcement présente des lobes, permet de créer une résistance aux fluctuations radiales de l'arbre qui croît au fur et à mesure que la vitesse croît et surtout de redistribuer cette charge sur une surface aussi large que possible.

Avantageusement, au démarrage, lorsque l'arbre commence à être entraîné en rotation, le film fluide selon l'invention est mince et la résistance du sous-ensemble de palier est faible, ce qui permet de démarrer sous faible couple.

Avantageusement, chaque palier peut comporter un seul sous-ensemble de palier. Dans ce cas, la lame supérieure et la lame de renforcement s'étendent selon toute la circonférence de l'arbre rotatif. La lame de renforcement présente alors une pluralité de lobes. Chacun de ces lobes exerce une pression sur un ensemble de lames ondulées avec lequel il est solidarisé, par exemple par un cordon de soudure. Chaque ensemble de lames ondulées est distinct des autres, mais une lame de renforcement unique s'applique sur tous les ensembles de lames ondulées.

Avantageusement encore, chaque palier comporte une pluralité de sous-ensembles de palier. Chacun de ces sous-ensembles présente une lame supérieure, une lame de renforcement munie d'au moins un lobe, et un ensemble de lames ondulées sensiblement de la même longueur que les lames supérieure et de renforcement.

D'autres objets, caractéristiques et avantages de la présente invention seront mieux compris avec la description qui suit, à titre d exemple, en référence aux dessins annexés dans lesquels :
- la figure 1 est une vue schématique en coupe transversale d'un palier selon un premier mode de réalisation de l'invention,
- les figures 2 et 3 sont des vues schématiques en coupe transversale des sous-ensembles de palier respectivement selon une première et une seconde variante et
- la figure 4 est une vue schématique en coupe transversale d'un palier aérodynamique selon un second mode de réalisation de l'invention.

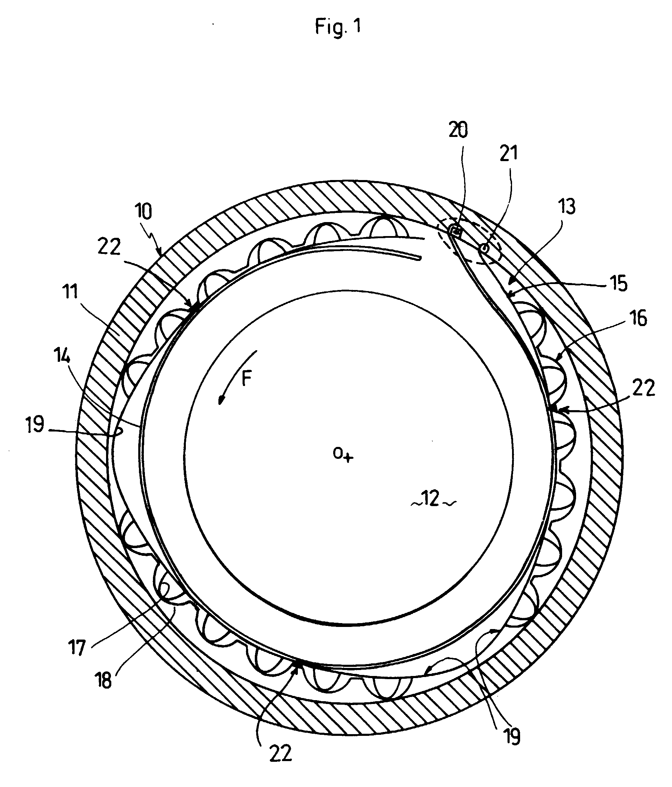

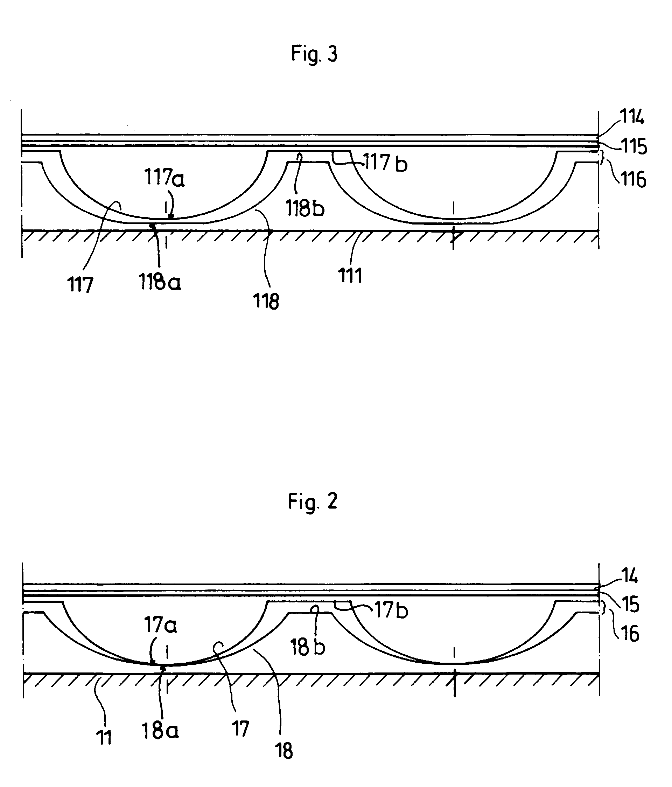

Selon la forme de réalisation représentée aux figures 1 et 2, le palier 10 selon l'invention comporte un fourreau 11, un arbre rotatif 12 (entraîné en rotation selon le sens de la flèche F) et au moins un sous-ensemble de palier 13.

Ce sous-ensemble de palier 13 (figure 1) est constitué par :
- une lame supérieure souple 14 s'étendant sensiblement selon toute la circonférence de l'arbre 12 ; cette lame supérieure est fixée au fourreau par un dispositif de fixation 20 de type connu, par exemple par la coopération d'une barrette et d'une gorge, voire par soudure, ce qui permet un pivotement de cette lame par rapport à son point de fixation,
- une lame de renforcement 21, s'étendant sensiblement selon toute la circonférence de l'arbre 12, et présentant trois lobes 19 (dans l'exemple représenté) de courbures déterminées, cette lame étant fixée au fourreau 11 par un dispositif de fixation 21 de type équivalant à celui de la lame souple 14,
- un ensemble de lames ondulées 16 formé par une lame ondulée inférieure 18 et une lame ondulée supérieure 17. Cet ensemble de lames ondulées est solidarisé à la lame de renforcement 15 par un cordon de soudure 22.

Ces lames ondulées (figure 2) inférieure 18 et supérieure 17 sont placées de telle sorte que les bossages 18a de la lame ondulée inférieure 18 soient en correspondance avec ceux 17a de la lame ondulée supérieure 17.

Ces bossages 17a et 18a sont en contact à leur base. Les lames ondulées 17 et 18 présentent entre ces bossages des parties aplaties 17b, 18b, espacées l'une de l'autre. La hauteur des bossages inférieur et supérieur est donc différente. Leurs rayons de courbure respectifs sont également différents.

Comme cela est mieux visible à la figure 1, chaque lobe 19 de la lame de renforcement exerce une précharge en un point donné (point de soudure 22) sur chaque ensemble de lames ondulées. Chaque ensemble est ainsi préchargé (en l'absence de toute rotation de l'arbre 12). Cette précharge provoque le contact de l'ensemble de lames ondulées avec le fourreau, au niveau des bossages d'extrémités uniquement. On notera que la forme de l'ensemble des lames ondulées est donnée par la lame de renforcement, qui présente des zones de courbures déterminées dont les rayons de courbure sont supérieurs à celui du fourreau.

On notera que la soudure des ensembles de lames ondulées à la lame de renforcement est effectuée entre leur centre et le bord libre de ceux-ci.

Il en résulte que la résistance du sous-ensemble de palier au niveau de cette soudure est supérieure à celle au niveau des extrémités libres de l'ensemble de lames ondulées. Ainsi, l'épaisseur du film aérodynamique associé décroît graduellement de l'extrémité libre vers la zone de soudure.

La déflection de ces ensembles de lames ondulées, provoquée par la rotation de l'arbre 12, ne produit que des courbures de chacune des lames 14, 15 et 16 ; il n'y a pas de déformation élastique des bossages en eux-mêmes.

Une telle déflection produit une faible résistance lors de faible charge, notamment lors du démarrage. On minimise ainsi l'usure de l'arbre 12 et de la lame supérieure 14 avant la mise à pleine rotation. Ceci facilite également les faibles vitesses de démarrage.

Un autre avantage d'un tel mode de réalisation est que les lobes de la lame de renforcement se conforment plus facilement à la forme du fourreau et donc que le palier est susceptible de supporter des charges supérieures à faible vitesse.

On notera que, du fait des hauteurs différentes (figure 2) des bossages, il est possible d'obtenir des caractéristiques de résistance variées au niveau de la structure élastique. A l'état initial, les bossages ne se contactent pas les uns les autres ; la résistance résultante est faible.

Sous charge plus importante, les bossages viennent en contact les uns des autres et la résistance de l'ensemble augmente. On notera que les lames ondulées inférieure et supérieure peuvent être légèrement décalées pour palier le désalignement des bossages dû à la déformation de ces lames. Le palier ainsi décrit permet la création d'un film aérodynamique fluide d'épaisseur variable tout autour de la circonférence de l'arbre, lorsque celui-ci est en rotation. De manière avantageuse, ce film est d'épaisseur plus importante aux endroits où la résistance latérale doit être plus importante. La courbure de la lame de renforcement et l'emplacement de la soudure de l'ensemble de lames ondulées sur cette lame de renforcement permettent de définir avec précision ces endroits de plus grande résistance, et de faire varier leur emplacement le cas échéant.

En variante, les bossages inférieurs 118a (figure 3) sont aplatis pour contacter le fourreau sur une plus grande surface. Cependant, dans cette variante, la hauteur des bossages supérieur et inférieur demeure distincte, ce qui permet des déformations indépendantes (au moins sous faible charge) des lames ondulées inférieure et supérieure.

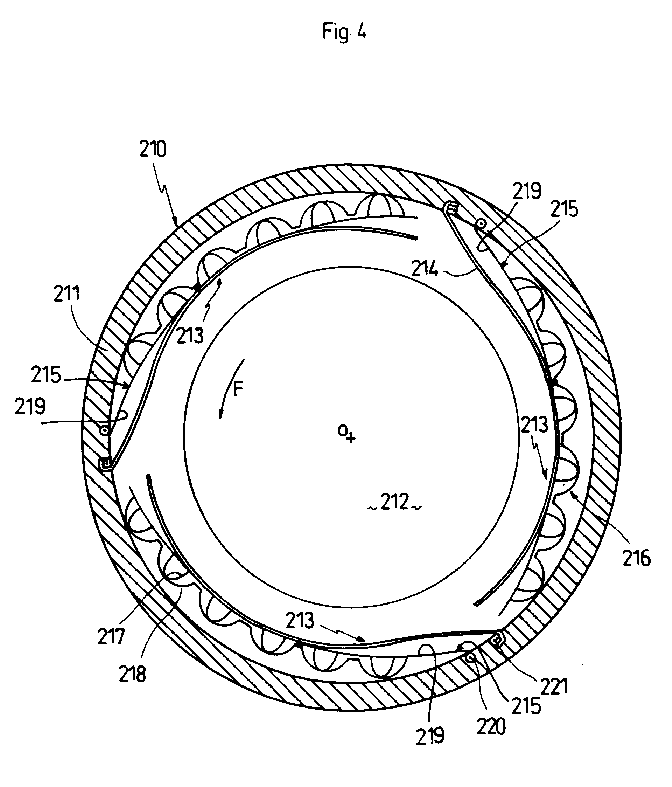

Selon le mode de réalisation présenté à la figure 4, la lame supérieure 214 et la lame de renforcement 215 ne s'étendent pas sur l'ensemble de la circonférence de l'arbre 212, mais uniquement sur des parties de celle-ci, en regard de chaque sous-ensemble 213 de lames ondulées. La lame de renforcement 215 présente alors un seul lobe 219 de rayon de courbure supérieur à celui du fourreau correspondant. Ce lobe est adapté pour exercer une précharge sur l'ensemble de lames ondulées correspondant.

En variante, bien sûr les bossages des lames ondulées peuvent présenter des parties courbes ou des parties aplaties (figures 2 et 3).

En variante encore, l'ensemble de lames ondulées peut présenter une seule lame ondulée directement soudée en l'un de ces points au fourreau et non à la lame de renforcement.

Bien sûr, la présente invention n'est pas limitée aux modes de réalisation choisis, mais englobe toute variante à la portée de l'homme de l'art. Ainsi, la lame de renforcement peut comporter plus ou moins de trois lobes. De même, lorsque le palier aérodynamique selon l'invention est constitué d'une pluralité de sous-ensembles de palier, chacun de ces sous-ensembles peut comporter une lame de renforcement multilobes, reposant sur un seul ensemble de lames ondulées.

## Revendications

1. Palier aérodynamique à film fluide du type comportant un fourreau cylindrique (11, 111, 211), dans lequel est placé un arbre (12, 212) entraîné en 5 rotation, ledit palier présentant au moins un sous-ensemble de palier (13, 213) placé entre le fourreau et l'arbre rotatif, ce sous-ensemble étant adapté pour maintenir espacé le fourreau et l'arbre et pour faciliter la création entre eux d'un film fluide présentant une résistance ) déterminée vis-à-vis des fluctuations transversales de l'arbre à l'intérieur du fourreau, ce sous-ensemble de palier comportant :
- une lame supérieure souple (14, 114, 214) s'étendant selon une partie, au moins, de la circonférence de l'arbre (12, 212),
- un ensemble de lames ondulées (18, 118, 218) placées entre le fourreau (11, 111, 211) et la lame supérieure (14, 114, 214), s'étendant selon une partie, au moins, de la circonférence du fourreau,
- une lame de renforcement (15, 115, 215) placée entre la lame supérieure et l'ensemble de lames ondulées, ledit palier étant caractérisé en ce que cette lame de renforcement est solidaire (21) par une de ses extrémités du fourreau, et présente au moins un lobe (19, 219) de courbure déterminée solidaire de l'ensemble de lames ondulées correspondant (18, 118, 218).

2. Palier selon la revendication 1, caractérisé en ce qu'il comporte un seul sous-ensemble de palier (13), dans lequel les deux lames supérieure (14) et de renforcement (15) s'étendent selon toute la circonférence de l'arbre, tandis qu'une pluralité d'ensembles de lames ondulées est placée entre la lame de renforcement et le fourreau, et en ce que la lame de renforcement (15) comporte une pluralité de lobes (19) de courbures déterminées, chacun de ces lobes étant solidaire d'un ensemble de lames ondulées (18) distinct.

3. Palier selon la revendication 2, caractérisé en ce qu'aux limites de chaque lobe (19), l'ensemble de lames ondulées (16) contacte le fourreau (11).

4. Palier selon la revendication 1, caractérisé en ce qu'il comporte une pluralité de sous-ensembles de palier (213).

5. Palier selon l'une des revendications précédentes, caractérisé en ce que chaque ensemble de lames ondulées (16, 116, 216) présente une lame ondulée inférieure (18, 118, 218) au moins partiellement en contact avec le fourreau et une lame ondulée supérieure (17, 117, 217) solidarisée avec la lame de renforcement (15, 115, 215).

6. Palier selon l'une des revendications précédentes, caractérisé en ce que chaque ensemble de lames ondulées (16, 116, 216) est fixé à la lame de renforcement (15, 115, 215) par un cordon de soudure adapté pour renforcer la rigidité du sous-ensemble de palier en ce point.

## Patentansprüche

1. Aerodynamisches Flüssigkeitsfilmlager der eine zylindrische Hülse (11, 111, 211) umfassenden Art, in der sich eine rotierend angetriebene Welle (12, 212) befindet, wobei das besagte Lager mindestens eine zwischen der Hülse und der Rotationswelle angeordnete Lagerunterbaugruppe (13, 213) aufweist, wobei die besagte Lagerunterbaugruppe so konstruiert ist, daß sie zwischen der Hülse und der Welle einen Zwischenraum bedingt und die Bildung darin eines Flüssigkeitsfilms erleichtert, der Querschwankungen der Welle im Inneren der Hülse einen voreingestellten Widerstand bietet, wobei die besagte Lagerunterbaugruppe des Lagers folgende Teile umfaßt:
- ein oberes flexibles Blatt (14, 114, 214), das sich entlang mindestens einem Teil des Umfangs der Welle (12, 212) erstreckt,
- eine Gruppe von zwischen der Hülse (11, 111, 211) und dem oberen Blatt (14, 114, 214) angeordneten welligen Blättern (18, 118, 218), die sich mindestens entlang einem Teil des Hülsenumfangs erstrecken,
- ein zwischen dem oberen Blatt und der Gruppe welliger Blätter angeordnetes Verstärkungsblatt (15, 115, 215),
wobei das besagte Lager dadurch gekennzeichnet ist, daß das besagte Verstärkungsblatt an einem seiner Enden mit der Hülse fest verbunden (21) ist, und mindestens eine Überhöhung (19, 219) vorgewählter Krümmung aufweist, wobei die besagte Überhöhung fest mit der entsprechenden Gruppe welliger Blätter (18, 118, 218) verbunden ist.

2. Lager nach Anspruch 1, dadurch gekennzeichnet, daß es eine einzige Lagerunterbaugruppe (13) umfaßt, in der sich die beiden Blätter, und zwar das obere Blatt (14) und das Verstärkungsblatt (15), über den gesamten Umfang der Welle erstrecken, wobei eine Mehrzahl von Gruppen welliger Blätter zwischen dem Verstärkungsblatt und der Hülse angeordnet ist, sowie dadurch, daß das Verstärkungsblatt (15) eine Mehrzahl von Überhöhungen (19) vorgewählter Krümmungen umfaßt, wobei jede der besagten Überhöhungen fest mit einer getrennten Gruppe welliger Blätter (18) verbunden ist.

3. Lager nach Anspruch 2, dadurch gekennzeichnet, daß an den Grenzen jeder Überhöhung (19) die Gruppe welliger Blätter (16) mit der Hülse (11) in Kontakt ist.

4. Lager nach Anspruch 1, dadurch gekennzeichnet, daß es eine Mehrzahl von Lageruntergruppen (213) umfaßt.

5. Lager nach einem der vorstehenden Ansprüche, dadurch gekennzeichnet, daß jede Gruppe welliger Blätter (16, 116, 216) ein unteres welliges Blatt (18, 118, 218) aufweist, das mindestens teilweise mit der Hülse in Kontakt ist, sowie ein oberes welliges Blatt (17, 117, 217), das fest mit dem Verstärkungsblatt (15, 115, 215) verbunden ist.

6. Lager nach einem der vorstehenden Ansprüche, dadurch gekennzeichnet, daß jede Gruppe welliger Blätter (16, 116, 216) mit Hilfe einer Schweißnaht, die so beschaffen ist, daß sie zu der Steifheit der Lageruntergruppe an diesem Punkte beiträgt, fest mit dem Verstärkungsblatt (15, 115, 215) verbunden ist.

## Claims

1. Aerodynamic fluid-film bearing of the type comprising a cylindrical sleeve (11, 111, 211) in which is located a shaft (12, 212) driven in rotation, said bearing having at least one bearing sub-assembly (13, 213) located between the sleeve and the rotary shaft, said sub-assembly being adapted to maintain the sleeve and the shaft at a distance from one another and to facilitate the creation between them of a fluid film exhibiting a given resistance to transverse fluctuations of the shaft within the sleeve, whereby said bearing sub-assembly comprises:
- a flexible upper blade (14, 114, 214) extending along at least part of the circumference of the shaft (12, 212),
- an assembly of corrugated blades (18, 118, 218) located between the sleeve (11, 111, 211) and the upper blade (14, 114, 214) extending along at least part of the circumference of the sleeve,
- a reinforcing blade (15, 115, 215) located between the upper blade and the assembly of corrugated blades, said bearing being characterised in that said reinforcing blade is firmly secured (21) by one of its ends to the sleeve and exhibits at least one lobe (19, 219) of given curvature, said lobe being firmly connected with the corresponding assembly of corrugated blades (18, 118, 218).

2. Bearing according to Claim 1, characterised in that it comprises a single bearing sub-assembly (13) in which the two blades, i.e. the upper blade (14) and the reinforcing blade (15), extend along the entire circumference of the shaft, a plurality of assemblies of corrugated blades being located between the reinforcing blade and the sleeve, and in that the reinforcing blade (15) comprises a plurality of lobes (19) of given curvatures, each of said lobes being firmly connected with a separate assembly of corrugated blades (18).

3. Bearing according to Claim 2, characterised in that at the limits of each lobe (19) the assembly of corrugated blades (16) contacts the sleeve (11).

4. Bearing according to Claim 1, characterised in that it comprises a plurality of bearing sub-assemblies (213).

5. Bearing according to one of the preceding claims, characterised in that each assembly of corrugated blades (16, 116, 216) exhibits a lower corrugated blade (18, 118, 218) at least partly in contact with said sleeve and an upper corrugated blade (17, 117, 217) firmly connected with the reinforcing blade (15, 115, 215).

6. Bearing according to one of the preceding claims, characterised in that each assembly of corrugated blades (16, 116, 216) is attached to the reinforcing blade (15, 115, 215) by means of a welding seam so designed as to reinforce the rigidity of the bearing sub-assembly at this point.
